Europäisches Patentamt

European Patent Office

Office européen des brevets

(19)

(11) EP 0 862 335 A2

(12) EUROPEAN PATENT APPLICATION

(43) Date of publication:
02.09.1998 Bulletin 1998/36

(51) Int Cl.⁶: H04N 9/73

(21) Application number: 98301418.4

(22) Date of filing: 26.02.1998

(84) Designated Contracting States:
AT BE CH DE DK ES FI FR GB GR IE IT LI LU MC NL PT
Designated Extension States:
AL LT LV MK RO SI

(30) Priority: 28.02.1997 US 808917

(71) Applicant: Hewlett-Packard Company
Palo Alto, California 94304 (US)

(72) Inventors:
• Fontani, Paolo
  Escondito, California 92026 (US)
• Sansom-Wai, Cindy V.
  San Diego, California 92128 (US)

(74) Representative: Molyneaux, Martyn William
Langner Parry
52-54 High Holborn
London WC1V 6RR (GB)

(54) **Automatic color adjustment on host for strobe usage on a digital camera**

(57) A method and apparatus for performing color balance enhancement using a host to adjust the color of a digital image taken by a digital camera. Digital image data is received within a host from a digital camera together with information indicating whether a strobe was used to assist in illuminating objects to be imaged. White Balance Factors associated with a corresponding one of three colors are also sent from the camera to the host. Based upon the value of the White Balance Factors, the host determines how much gain was applied to the red and blue outputs from the detectors with respect to the output from the green detectors. The host attempts to return the color balance of the image to the balance that was originally detected by the camera The present invention compensates for the loss of color information by subjecting the image data to an algorithm that attempts to reestablish the correct ratio between the red, green, and blue components of the image. Once the color balance of the image has been returned as nearly as possible to the original color balance (i.e., the balance that existed at the output from the detectors), the present invention adjusts the color balance to compensate for the type of light source actually used.

FIG. 1

**Description**

**BACKGROUND OF THE INVENTION**

1. *Field of the Invention*

This invention relates to digital cameras, and more particularly to a method and apparatus for performing color adjustment upon images taken with a digital camera.

2. *Description of Related Art*

Digital still cameras are being developed today to allow an image to be captured, digitized, stored, and reproduced using conventional printers coupled to a conventional personal computer. In most cases, an array of charge-coupled-device (CCD) detectors are used to capture the image. Each detector of the CCD array is used to capture the light associated with one portion of the image. When light is received by a CCD detector, an electrical charge representative of the intensity of the light to which the detector has been exposed is accumulated. This charge can be coupled to an A/D (analog to digital) converter. The A/D convertor produces a digital value that represents the charge on each of the detectors, and thus the amount of the light received by each detector.

If color image is to be captured, then color filters are placed before each detector of the CCD array. Accordingly, a detector which is associated with a filter that passes essentially only red light will form a red detector. The color detectors are arranged in groups. For example, in one CCD array, the detectors are arranged in two by two groups in which the top left detector is a red detector, the top right detector is a green detector, the bottom left detector is a green detector, and the bottom right detector is a blue detector. Each detector generates information for one "CCD pixel". By taking the digital value associated with groups of different colored CCD pixels, the color composition of the image is determined in a "demosaic" procedure. After demosaic processing of the CCD pixels, the image is represented by a set of "image pixels".

Each image pixel has complete color information for a point in the image.

One problem that is encountered when attempting to capture an image of a particular scene is that the amount of color detected by each detector may be altered due to the composition of the spectrum of light emitted by a particular light source which illuminates the scene. For example, if a scene is illuminated by a tungsten light source, then the image of that scene will be shifted toward the red spectrum, since tungsten light sources emit more red light than blue or green light. This shift will give the resulting digital image an undesirable reddish/orangish appearance.

In accordance with one method that has been used to process an image to adjust for differences in the nature of the ambient light, variable gain amplifiers are provided in line with the red and blue signals. The amount of gain applied to the red and blue signals is adjusted to compensate for the type of ambient light which illuminates the image. A manual control on the camera allows the user to select between tungsten mode and daylight mode. In tungsten mode, the gains of the amplifiers that are responsible for amplifying the output from the red and blue detectors are set to a first gain ratio to compensate for the blue shift. In daylight mode, a second gain ratio is used which causes the gain of the amplifiers responsible for amplifying the red and blue signals to be approximately equal to the amount of gain which is set for the green signals.

Selection of the particular gain ratio is also dependent upon the state of a relay. The relay overrides the manual control when a strobe has been charged, since the use of a strobe will alter the color composition of the image. That is, the gain ratio of the color signal amplifiers should be essentially the same when capturing an image using of a strobe device and when capturing an image during daylight. Therefore, when a strobe device is charged to illuminate an image, the relay sets the mode of the variable gain amplifiers to the daylight setting, as is appropriate in the case in which a strobe is to be used. Thus, by altering the gain of the amplifiers responsible for amplifying the outputs from the red and blue detectors, the color is properly balanced for the case in which an image is to be captured in tungsten lighting, daylight, or when a strobe is used.

However, this system can improperly adjust the color of the image that is captured if the strobe is charged, but not actually activated. Furthermore, the amount of color adjustment that is performed is essentially fixed at one of two particular ratios (i.e., the gain of the amplifiers is set to one of two levels). Accordingly, if the amount of color adjustment that is required is other than that which would be desirable if the image were illuminated solely by tungsten or solely by natural sunlight, then the color of the image will be improperly adjusted.

Accordingly, it would be desirable to provide a system wherein the amount of color adjustment is determined by a determination as to whether the strobe has actually been activated. Furthermore, it would be desirable to provide a system wherein the amount of color adjustment can be adjusted to compensate for several different conditions and combinations of light sources.

## SUMMARY OF THE INVENTION

The present invention provides a method and apparatus for performing color balance enhancement using a host computer to adjust the color of a digital image taken by a digital camera.

In accordance with the present invention, digital image data is received within a host device, such as a personal computer, from a digital camera. In addition to the digital image data the digital camera preferably transmits to the host a header which contains information indicating whether a strobe was used to assist in illuminating the objects to be imaged. The header also preferably contains "White Balance Factors". These White Balance Factors are essentially three "multipliers", each associated with a corresponding one of three colors: red, blue, or green. Based upon the value of the multipliers, the host determines the amount of gain that was applied to the red and blue outputs from the detectors with respect to the output from the green detectors. The host then attempts to return the color balance of the image to the balance that was originally, detected by the camera. That is, if the amount of red in the image was amplified with respect to the amount of blue, then the host attempts to return the ratio of red and blue to that which existed before the outputs from the detectors were applied to amplifiers within the camera.

In some cases, color signal within the camera can become saturated, causing information regarding the relative amounts of each color with respect to each other color to be lost. This is most likely to occur when the camera has incorrectly identified the light source that was used to illuminate the image. For example, if, prior to taking the picture, the camera checks the ambient light conditions and determines that tungsten light is being used to illuminate the subject of a picture, then the camera will adjust for the tungsten lighting when the picture is taken. However, if upon taking the picture, a strobe is activated, the blue signal may be driven into saturation, since the amount of blue light in the image will have been under-estimated by the camera and the gain applied to the output from the blue detector will have been set too high. The present invention compensates for the loss of color information by subjecting the image data to an algorithm that attempts to reestablish the correct ratio between the red, green, and blue components of the image.

Once the color balance of the image has been returned as nearly as possible to the original color balance (i.e., the balance that existed at the output from the detectors), the present invention adjusts the color balance to compensate for the type of light source actually used.

Because the present invention provides color balancing within the host, the digital camera that captures the image need not have complex or sophisticated circuitry for performing automatic color balance. Furthermore, since the color balancing is performed within the host after the picture has been taken, a determination as to whether a strobe was used can be made based upon information provided from the camera as to whether the strobe was actually activated, as opposed to whether the strobe was charged and ready to be activated.

## BRIEF DESCRIPTION OF THE DRAWING

The objects, advantages, and features of this invention will become readily apparent in view of the following description, when read in conjunction with the accompanying drawing, in which:

Figure 1 is a block diagram of a digital camera in accordance with the present invention.

Figure 2a and 2b show a block diagram of a host coupled to a digital camera in accordance with the present invention.

Like reference numbers and designations in the various drawings refer to like elements.

## DETAILED DESCRIPTION OF THE INVENTION

Throughout this description, the preferred embodiment and examples shown should be considered as exemplars, rather than limitations on the present invention.

The present invention provides a method and apparatus for performing automatic white balance on an image captured by a digital camera. More particularly, the present invention provides a method and apparatus for balancing an image of objects illuminated by a strobe light when the image has been adjusted to perform automatic white balance considering only the effect of the ambient light on the color balance without considering the effect that the strobe light would have on the color balance.

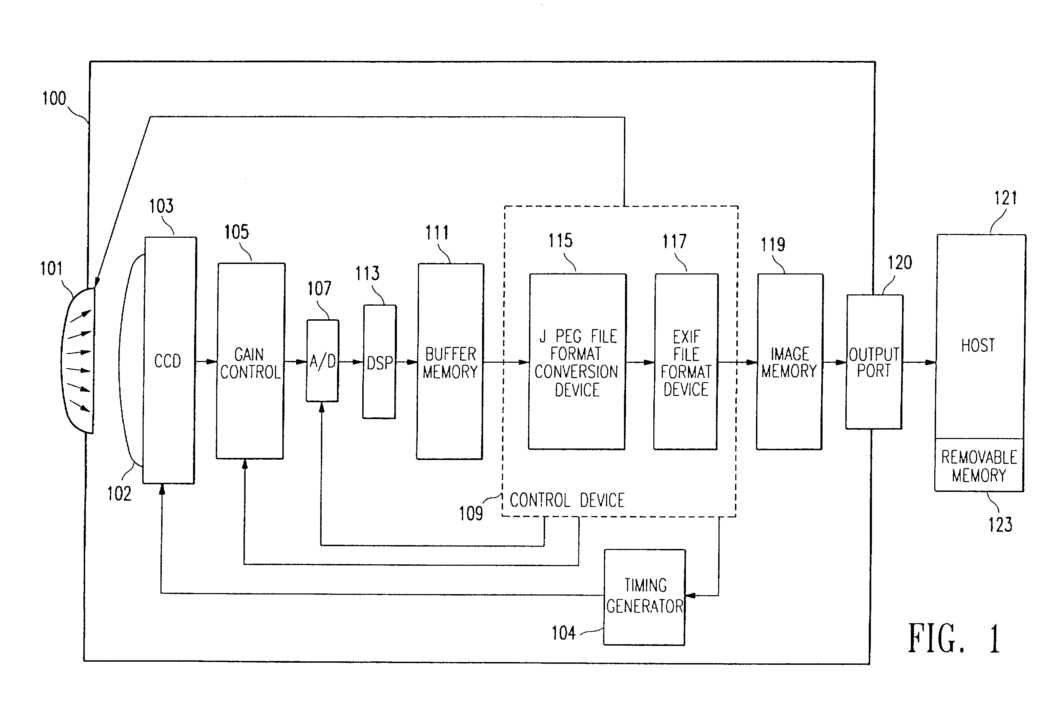

Figure 1 is a block diagram of one embodiment of a digital camera 100 in accordance with the present invention. The digital camera 100 includes: an optical lens 101; an array of charge-coupled-device (CCD) detectors 103 having color filters 102 integrally formed in the array to filter the light that is detected; a gain control circuit 105; an A/D (analog to digital) convertor 107; a control device 109 (such as a microprocessor), preferably including a JPEG file format conversion device 115 and an EXIF file format device 117; a buffer memory 111; an image processing device 113, such as a DSP (digital signal processor); an image memory device 119; and an output port 120.

Light enters the digital camera 100 through the lens 101 and is focused on the array of CCD detectors 103. As is well known in the art, the color filters 102 associated with each detector within the CCD array 103 cause the detectors to be sensitive to one particular color. In accordance with one embodiment of the present invention, the CCD detectors are configured in a repeating pattern of two by two groups in which the top right detector is sensitive to red light, the top left detector is sensitive to green light, the bottom right detector is sensitive to green light, and the bottom left detector is sensitive to blue light. It should be understood that the array of detectors may be fabricated such that the particular detectors are sensitive to other colors and are arranged in other configurations.

Each detector accumulates a charge that is representative of the amount of light in one CCD pixel. A timing generator 104 is coupled to the CCD detector array 103. The timing generator 104 controls the reading of the CCD detector array 103 in essentially conventional fashion. The timing generator 104 causes the charge accumulated by each detector to be serially applied to the input of the gain control device 105. The control device 109 is coupled to the timing generator and controls the operation of the timing generator 104 in essentially conventional fashion.

The timing generator 104 is capable of flushing the CCD array 103 to essentially discharge any charge previously accumulated the detectors within the array. Once the CCD array 103 has been flushed, the light that passes through the lens and the color filters causes charge to accumulate on each of the detectors within the CCD array 103 in an amount that is proportional to the amount of light that strikes each detector. The charge that accumulates on each detector within the CCD array 103 results in a voltage that is coupled to the gain control circuit 105. The gain control circuit 105 includes automatic gain control circuitry. The gain control circuit 105 also includes circuitry to implement a correlated double sampling process. The correlated double sampling process is a conventional process which accounts for overshoot and undershoot in the output from the CCD detectors as the CCD array is read.

The control device 109 is coupled to the gain control device and controls the automatic gain control circuit. The output from the gain control circuit 105 is coupled to the A/D converter 107. The A/D converter 107 concerts to digital values the voltages read from the CCD detectors and processed by the gain control circuit 105. The resulting digital values are preferably directly proportional to the amount of light detected by each detector.

The A/D converter 107 is coupled to the DSP 113. The DSP 113 processes the color information stored in the buffer memory 111 to provide a demosaic function, to perform automatic white balance, and to sharpen the image. The DSP 113 determines which values are coupled from the A/D converter 107 to the DSP 113 are associated with which detectors by the order in which the values are received from the A/D converter 107. The demosaic function and the automatic white balance functions are conventional functions. For example, in accordance with one embodiment of the present invention, the DSP 113 is a Part No. HD49811TFA commercially available from Hitachi and the automatic white balance function is provided in the HD49811TFA data sheet distributed by Hitachi. The output from the DSP 113 is a set of image pixels, each of which represent the color of a particular portion of the image that was captured by the CCD detector array 103. Accordingly, the complete set of image pixels comprise the image data. The image data is stored in a buffer memory 111. The buffer memory 111 is read by the control device 109.

In accordance with one embodiment of the present invention, the control device 109 includes a conventional dedicated integrated circuit which perform a JPEG file format conversion. Therefore, in accordance with one embodiment of the present invention, a combination of hardware and software executed within the control device 109 operate together to form a JPEG file format conversion device 115. However, in accordance with another embodiment of the present invention, the JPEG file format conversion device comprises only hardware. Alternatively, the JPEG file format conversion device 115 is a software routine performed within a programmable control device 109. In either case, file format conversion is performed in conventional fashion. In yet another embodiment of the present invention, no compression is performed. In still another embodiment, compression is performed in accordance with a standard other than JPEG.

The JPEG file format conversion process compresses the information output from the DSP 113 and stored in the buffer 111 in accordance with the well known JPEG data compression standard. The information which is in JPEG format is then embedded within a file which conforms to "Digital Still Camera Image File Format Standard" (Version 1.0. July 13. 1995) (commonly known as "EXIF"), defined by the JEIDA Electronic Still Camera Technical Committee. The file is embedded within the EXIF file by an EXIF file format device 117 within the control device 109. In accordance with one embodiment of the present invention, the EXIF file format device is a combination of software executed within the control device 109 and dedicated hardware. However, in an alternative embodiment, the EXIF file format device 117 is a software routine performed within the control device 109. In yet another embodiment of the present invention, the EXIF file format device 117 comprises only dedicated hardware. It will be understood by those skilled in the art that file formats other than the well known EXIF file format may be used.

In the preferred embodiment of the present invention, the image information is compressed in accordance with the well known JPEG data compression technique and presented in $YC_bC_r$ format with 4:2:2 subsampling. However, it should be understood that in accordance with an alternative embodiment of the present invention, the output from the DSP 113 may be formatted in any manner which allows a host 121, such as a personal computer, to read and interpret the information provided by the camera 100 to the host 121.

In addition to the essentially conventional information that is provided from the camera 100 to the host 121 in accordance with the EXIF standard, a camera in accordance with the present invention provides "White Balance Factors". The White Balance Factors preferably include the following six values: (1)Red-Mantissa, (2)Blue-Mantissa. (3) Green-Mantissa, (4) Red-Exponent, (5) Blue-Exponent, and (6) Green-Exponent. The combination of the Mantissa and Exponent associated with each of the colors indicates a factor by which the value representing the relative amount of each color present within each image pixel is multiplied in an attempt to adjust the white balance of the image. For example, in accordance with one embodiment of the present invention, the image pixels are represented in rgb format. In accordance with the well known rgb format, three values are used to represent the color of an image pixel, one of which represents the amount of red, one which represents the amount of green, and one which represents the amount of blue. Therefore, one image pixel may be represented by three digital values in the range of 0 to 255, each value representing the relative amount of red, blue and green light that was detected as coming from (i.e., emitted or reflected from) an area that is essentially equal to the area represented by the image pixel. For example, an image pixel may be represented by the following three values, a blue value equal to 150, a red value equal to 10, and a green value equal to 125.

If the gain control circuit 105 provides more amplification to the blue than to the red, then the product of the blue Mantissa and the blue Exponent will be greater than the product of the red Mantissa and the red Exponent. The green Mantissa and Exponent are essentially fixed values used as a reference. In contrast, the value of the blue and red mantissa and exponent are adjusted to compensate for differences in the "color temperature" of the light source that illuminates the objects whose images are to be captured. Color temperature, as defined for the purposes of this discussion, is the relative amount of red, blue, and green in the light source. The information output from the EXIF file format circuit 117 is preferably stored as a data file in the image memory device 119. The image memory device 119 is coupled to the output port 120. The output port 120 transfers the data file to an external device, such as a host 121. In accordance with one embodiment, the transfer is performed over a hard wire connection. However the transfer may be performed over an optical connection, by writing to a removable storage media which is then read by the host device 121, or by any other means for transferring the information from the camera to the host.

The present invention provides a method by which color balance is corrected within a host device 121, such as a personal computer, when a strobe has been used to illuminate the objects whose image is to be captured. The method is preferably performed by the host reading a program storage device, such as a removable memory 123 upon which a program of instructions is stored for execution by the host, such as a floppy disk.

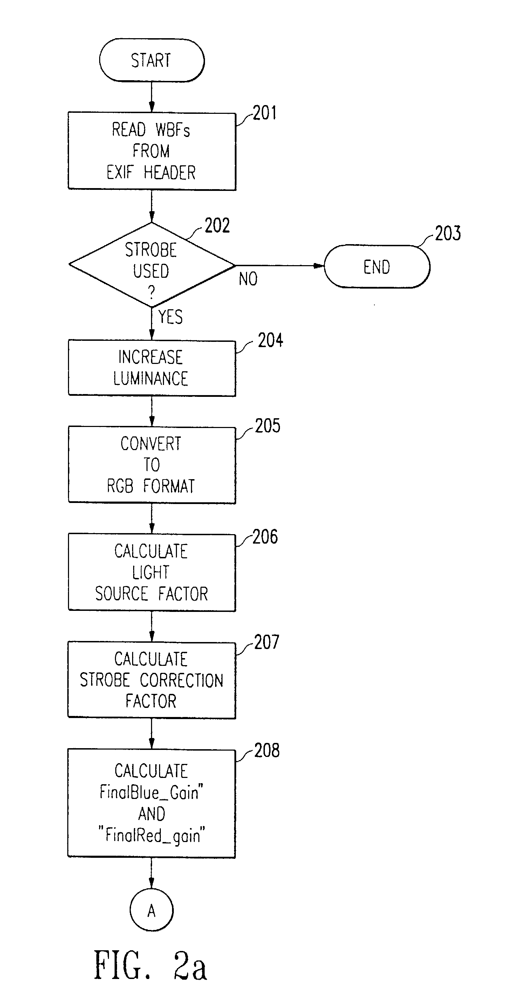

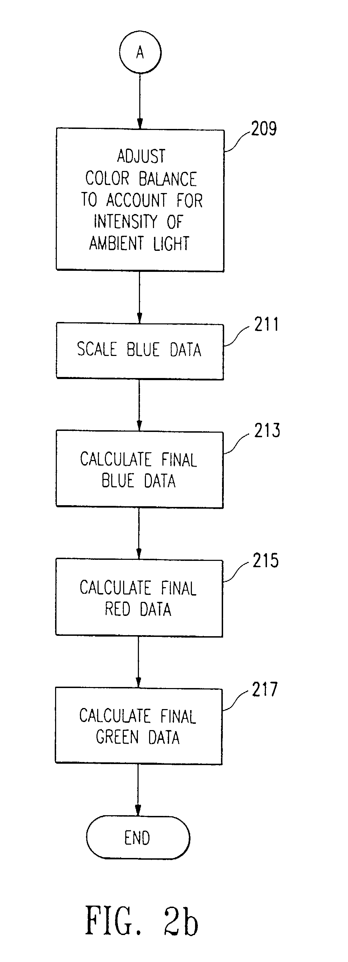

Figures 2a and 2b show a flow chart of the steps that are performed in accordance with one embodiment of the present invention. The first step is to read the White Balance Factors from the header of the EXIF file that is transmitted from the camera to the host (STEP 201). Next, a determination is made as to whether a strobe was used (STEP 202). If a strobe was not used, then the process ends (STEP 203). However, if a strobe was used, then the luminance of the image is increased (i.e., the picture is made brighter) (STEP 204) in order to compensate for the fact that some information is lost in the process of incorrectly performing white balancing in the camera. This compensation is preferably done by multiplying the luminance of each image pixel by a factor of $((Y/255)^{GAMMA}) * 255$. In accordance with one embodiment of the present invention, the value of GAMMA is approximately 0.8. This value has been determined by empirical methods and those skilled in the art will understand that other factors may be used to adjust the brightness of the image. Furthermore, in an alternative embodiment of the present invention, no adjustment is made to the brightness of the image.

Next, the image data is preferably converted from $YC_bC_r$ format to RGB format (STEP 205). Techniques for performing such conversions are well known to those skilled in the art. Conversion of the image data to RGB format allows adjustments to the color balance to be made more simply and directly to the image data. Next, a light source factor is calculated in association with each of the three colors (STEP 206). In accordance with one embodiment of the present invention, the light source factors are calculated by applying the following three equations:

$$\text{LightRed\_Gain} = (2^{(Red\_Exponent)}) * (Red\_Mantissa)/128 ; \qquad \text{Eq. 1}$$

$$\text{LightBlue\_Gain} = (2^{(Blue\_Exponent)}) * (Blue\_Mantissa)/128 ; \qquad \text{Eq. 2}$$

$$\text{LightGreen\_Gain} = 2 \qquad \text{Eq. 3}$$

The LightRed_Gain calculated in Equation 1 and the LightBlue_Gain calculated in Equation 2 are approximately the gains that were applied to the image data by the variable gain amplifiers of the gain control circuit 105 within the camera 100. However, as will be seen below, additional adjustments must be made to compensate for the fact that some data is lost during the attempt to perform automatic white balance within the digital camera 100 when the strobe is activated.

Next, a strobe correction factor is calculated by applying the following three equations (STEP 207):

$$\text{StrobeRed\_Gain} = (2^{(\text{StrobeRed\_Exponent})}) * (\text{StrobeRed\_Mantissa})/128 ; \qquad \text{Eq. 4}$$

$$\text{StrobeBlue\_Gain} = (2^{(\text{StrobeBlue\_Exponent})}) * (\text{StrobeBlue\_Mantissa})/128 ; \qquad \text{Eq. 5}$$

$$\text{StrobeGreen\_Gain} = 2 \qquad \text{Eq. 6}$$

The values "StrobeRed_Exponent", "StrobeRed_Mantissa", "StrobeBlue_Exponent", "StrobeBlue_Mantissa" are fixed values that are predetermined in order to adjust the color balance to compensate for the color temperature of the strobe that has been used to illuminate the objects during the period when the image is being captured. In accordance with one embodiment of the present invention, the values are:

StrobeRed_Exponent = 2;
StrobeRed_Mantissa = 176;
StrobeBlue_Exponent = 1; and
StrobeBlue_Mantissa = 128

Next, the values of FinalBlue_Gain and FinalRed_Gain are calculated (STEP 208) as follows:

$$\text{FinalBlue\_Gain} = \text{StrobeBlue\_Gain}/\text{LightBlue\_Gain}; \text{ and} \qquad \text{Eq. 7}$$

$$\text{FinalRed\_Gain} = \text{StrobeRed\_Gain}/\text{LightRed\_Gain} \qquad \text{Eq. 8}$$

It should be understood that by dividing the gain factor associated with the strobe by the gain factor that was applied within the camera, and multiplying the resulting quotient by the image data. the gain factor that was applied during the attempt to perform automatic white balance in the camera is, in effect, removed and substituted with the gain factor for the strobe.

However, because the strobe may have more or less of an affect on the resulting color depending upon the brightness and color temperature of the ambient light source when the strobe is activated, the color balance must be further adjusted (STEP 209). The amount of adjustment that must be made to account for the intensity of the ambient light is preferably determined based upon the relative amount of gain that was applied in the camera 100. The following table provides the proper adjustment factor to be applied in accordance with one embodiment of the present invention.

TABLE 1

| LightRed_Gain | Red_Adjust | LightBlue_Gain | Blue_Adjust | Green-Adjust |
|---|---|---|---|---|
| <1.24 | 0.88 | >0.7 | 0.85 | 1.0 |
| <1.0 | 0.88 | <0.5 | 0.85 | 1.0 |
| <1.0 | 0.8 | <0.5 | 0.7 | 1.0 |
| >1.3 | 0.81 | <0.49 | 0.8 | 0.8 |
| >1.9 | 0.8 | <0.6 | 0.75 | 0.85 |
| >1.7 | 0.94 | >=0.51 | 0.9 | 0.95 |
| <1.2 | 0.8 | <=0.4 | 0.8 | 0.9 |
| <1.23 | 0.98 | >=0.6 | 0.85 | 1.0 |

The values of the table were derived by empirical analysis. It should be understood that an alternative embodiment of the present invention may use other values in place of those shown in Table 1, as long as the values that are used result in a good final result (i.e.. the color of the resulting image is well balanced after the adjustment).

Once the amount of the adjustment has been determined, an additional blue scaling factor is preferably calculated. This additional blue scaling factor is used to compensate for the fact that the FinalBlue_Gain will always be less than 1.0, since the amount of blue in the image will always have to be reduced. Therefore, the white point is destroyed (i. e., the value of the FinalBlueData will never be equal to the maximum value of 255, as required to achieve the white point). In order to retrieve the white point, the present invention preferably uses the image data to scale the White Balance Factors as follows (STEP 211):

$$\text{ScaledBlueData} = (\text{Bflip\_Gain}) - ((\text{Bflip\_Gain}) - 1) * (255 - \text{BlueData})/255 \qquad \text{Eq. 9}$$

where: Bflip_Gain = 1/FinalBlue_Gain

In an alternative embodiment of the present invention, the ScaledBlueData value is determined by a variation of equation 9. Variations of equation 9 will become obvious to those skilled in the art after examining equation 9. In another embodiment of the present invention, the BlueData is not scaled. In yet another embodiment of the present invention, the BlueData is scaled by a factor that is determined by empirical analysis. In accordance with the preferred embodiment, once the blue data has been scaled, the FinalBlueData can be calculated (STEP213). The FinalBlueData is calculated as follows:

$$\text{FinalBlueData} = \text{ScaledBlueData} * \text{FinalBlue\_Gain} * \text{Blue\_Adjust} * \text{BlueData} \qquad \text{Eq. 10}$$

In addition to the scaling of the blue data, when the camera uses a strobe to illuminate the objects to be captured in an image, but incorrectly uses an automatic white balance algorithm which is intended to be used when the objects are illuminated by a particular light source, such as tungsten, fluorescent, halogen, or any other light source, empirical analysis of images show that red data is lost in regions of the image in "shadow" regions of the image in which the red value is low before the automatic white balance is applied. Therefore, a Gamma correction must be used in addition to the red adjustment factor in order to properly adjust the red data (STEP 215). Therefore the final red data is preferably calculated as follows:

$$\text{FinalRedData} = ((\text{RedData} * \text{FinalRed\_Gain}/255)^{\text{Red\_adjust}}) * 255 \qquad \text{Eq. 11}$$

Empirical data also indicates that the green data must be adjusted by the Green_Adjust factor taken from Table 1. The value of the Green_Adjust factor is determined empirically. Accordingly, the value of the FinalGreenData is calculated as follows (STEP 217):

$$\text{FinalGreenData} = ((\text{GreenData}/255)^{\text{Green\_Adjust}}) * 255.$$

The FinalRedData, the FinalBlueData, and the FinalGreenData values associated with each image pixel of the image form a white balanced image which may then be printed by the host computer using a conventional printer, displayed on a conventional monitor (such as a cathode ray tube or liquid crystal display), or stored for use at a later time.

In an alternative embodiment of the present invention, the digital camera does not perform any color adjustment. In one such embodiment, the white Balance Factors are not provided by the camera if the camera does no color adjustment. Alternatively, the camera provides White Balance Factors which indicate that no color adjustment has been made. In addition, the camera may provide a separate message to the host that indicates that no color adjustment has been made in the camera. Furthermore, information may be provided by the camera that indicates the type of camera that has been used to capture the digital image. In accordance with one embodiment of the present invention, by determining the type of camera that is being used to capture the digital image, the host determines whether color adjustments have been made (i.e., some cameras may be incapable of adjusting the color balance of the digital image). In accordance with one embodiment of the present invention, the host maintains a lookup table which indicates which camera types are incapable of performing color adjustments.

In accordance with embodiments ofthe present invention in which no color adjustment is made in the camera, responsibility for performing white balance color adjustments resides with the host. In addition to the fact that the digital camera preferably provides information that indicates whether any adjustment was made, the camera may provide information as to whether the strobe was used in taking the picture. In accordance with one embodiment, additional information regarding the nature of the light source is also provided by the digital camera to the host to allow the host to properly white balance the image. However, in an alternative embodiment, such additional information is not provided.

*Summary*

A number of embodiments of the present invention have been described. Nevertheless, it will be understood that various modifications may be made without departing from the spirit and scope of the invention. For example, the steps of the method of the present invention are described as being performed in sequential order. However, in accordance with the present invention, the steps may be performed in a different order or in a manner which allows more than one step to be performed at a time. In addition, the particular order in which the steps are recited within the claims is not intended to act as a limitation on the particular order in which the steps must be performed, unless explicitly stated otherwise. Furthermore, the components of the digital camera are described as one example of devices which perform particular functions within a digital camera. Accordingly, the functions which are described as being performed within the digital camera may be performed by any device that is capable of performing the particular functions. For example, the control device 109 (Figure 1) may be a microprocessor, an application specific integrated circuit, a discrete circuit, a state machine, or any other circuit or component that is capable of performing the functions that are described above. Furthermore, while the present invention is described primarily in the context of a camera using CCD detectors. the detectors may be any light sensitive device, such as CMOS (complementary metal oxide semiconductor) detectors, or APS (active pixel sensors) sensors. Accordingly it is to be understood that the invention is not to be limited by the specific illustrated embodiments, but only by the scope of the appended claims.

## Claims

1. The method for adjusting a color balance of an image captured by a digital camera (100), the method including the steps of:

   (a) receiving within a host (121) information indicating whether a strobe was used to illuminate objects within the image; and
   (b) if a strobe was used, then adjusting the color balance by adjusting the relative amount of color to correct for the use of the strobe.

2. The method of Claim 1 further including if a strobe was used, then also adjusting the color balance of the image captured by the digital camera 100 to correct for a color balance adjustment made within the camera (100).

3. The method of Claims 1 or 2 wherein the image is represented as a plurality of pixels, the method further including the steps of:

   receiving white balance factors within a host 121;
   receiving image data within the host 121, the image data including values from which the amount of red, green and blue in each of the plurality of pixels of an image can be determined;
   calculating a red light source factor and a blue light source factor based upon the values of the received white balance factors;
   determining a red strobe correction factor and blue strobe correction factor;
   calculating a final red correction factor and final blue correction factor by dividing the strobe correction factor by the light correction factor;
   determining a red adjustment factor, a blue adjustment fact, and a green adjustment factor based upon the red, green, and blue light source factors;
   calculating a blue scaling factor;
   determining a final green correction factor;
   if a strobe was used, then adjusting the color balance of the image captured by:

      (1) adjusting the amount of blue within each pixel based upon the value of the blue scaling factor, the final blue correction factor, and the blue adjustment factor;
      (2) adjusting the amount of red within each pixel based upon the value of the final red correction factor and the red adjustment factor; and
      (3) adjusting the amount of green within each pixel based upon the value of a final green correction factor and a green adjustment factor.

4. The method of Claim 3, further including the step of adjusting the brightness of an image represented by the received image data if a strobe was used.

5. A method for adjusting within a host 121, a color balance of an image captured by digital camera 100, including the steps of:

(a) receiving within a host 121, information representing an image, the information including the relative amounts of color present in portions of the image;
(b) adjusting within the host 121, the relative amount of color in portions of the image to provide a predetermined color balance to the image.

6. A method for adjusting within a host 121, a color balance of an image captured by a digital camera 100, including the steps of:

(a) receiving within a host 121 information representing the image, the information including the relative amounts of color in portions of the image;
(b) receiving within the host 121, information representative of the amount of adjustment that has been applied in order to adjust the color of portions of the image;
(c) adjusting within the host 121, based upon the information representative of the amount of adjustment that has been applied in order to adjust the color of portions of the image, the relative amount of color in portions of the image to provide a predetermined color balance to the image.

7. The method of Claims 5 or 6 wherein the relative amounts of color present in portions of the image are represented by digital information.

8. The method of Claims 5, 6 or 7 wherein the step of adjusting includes the steps of:

(a) receiving within the host 121 information indicating whether a strobe was used to illuminate objects represented in the image; and
(b) if a strobe was used, then:

(1) adjusting the color balance by adjusting the relative amount of color to correct for a color balance adjustment made within the camera 100; and
(2) adjusting the color balance by adjusting relative amount of each color to correct for the use of the strobe.

9. A program storage device (123) readable by a digital processing apparatus 121 and tangibly embodying a program of instructions executable by the digital processing apparatus to perform method steps for adjusting within a host 121, providing a predetermined color balance to an image captured by a digital camera, the method steps comprising:

(a) receiving within the host 121, information representative of relative amount of color composing a digital image captured by an external digital camera 100;
(b) adjusting within the host, the relative amount of color to provide a predetermined color balance to the digital image.

10. A program storage device 123 readable by a digital processing apparatus and tangibly embodying a program of instructions executable by the digital processing apparatus 121 to preform method steps for adjusting within a host 121, providing a predetermined color balance to an image captured by a digital camera, the method steps comprising:

(a) receiving within the host 121, information representative of relative amount of red, green, and blue composing an image;
(b) adjusting within the host 121, the relative amount of red, green, and blue to provide a predetermined color balance to the image.

11. The program storage device 123 of Claim 10, wherein the method step of adjusting includes the steps of:

(a) receiving within the host 121, information indicating whether a strobe was used to illuminate objects within the image; and
(b) if a strobe was used, then

(1) adjusting the color balance of the image to correct for a color balance adjustment made within the camera 100; and
(2) adjusting the color balance of the image to correct for the use of the strobe.

12. The program storage device 123 of Claim 10, wherein the information representative of relative amount of red, green, and blue is represented as three digital values.

13. A digital camera 100 for capturing images and providing image data comprising image pixels, including:

(a) a control device 109 which determines a white balance factor;
(b) a file format circuit 117, coupled to the control device, which inserts the white balance factor into a data file; and
(c) a transfer means 120, coupled to the file format circuit 117, for transferring the data file to an external device.

14. The digital camera 100 of Claim 13, wherein the white balance factor is represented as a first value being associated with a first color, a second value associated with a second color, and a third value associated with a third color.

15. The digital camera 100 of Claim 14, wherein the first value is represented as a product of a first mantissa and a first exponent, the second value is represented as a product of a second mantissa and a second exponent, and the third value is represented as a product of a third mantissa and a third exponent.

FIG. 1

FIG. 2a

A

ADJUST
COLOR BALANCE
TO ACCOUNT FOR
INTENSITY OF
AMBIENT LIGHT
— 209

SCALE BLUE DATA — 211

CALCULATE FINAL
BLUE DATA
— 213

CALCULATE FINAL
RED DATA
— 215

CALCULATE FINAL
GREEN DATA
— 217

END

FIG. 2b